# EUROPÄISCHE PATENTSCHRIFT

(11) **EP 4 461 507 B1**
(45) Veröffentlichungstag und Bekanntmachung des Hinweises auf die Patenterteilung: **04.02.2026**
(21) Anmeldenummer: 24174735.1
(22) Anmeldetag: 08.05.2024
(51) Int. Cl.: B29C 49/42, B29C 49/78, B29C 49/06, B29C 49/36, B29L 31/00

(54) **VERFAHREN ZUM AUSLEITEN VON FEHLERHAFTEN HOHLKÖRPERN AUS EINER BEARBEITUNGSLINIE ZUR BEARBEITUNG VON HOHLKÖRPERN SOWIE SYSTEM ZUM AUSFÜHREN DES VERFAHRENS**
METHOD FOR DISCHARGING FAULTY HOLLOW BODIES FROM A PROCESSING LINE FOR PROCESSING HOLLOW BODIES, AND SYSTEM FOR CARRYING OUT THE METHOD
PROCÉDÉ DE DÉVIATION DE CORPS CREUX DÉFECTUEUX D'UNE LIGNE DE PRODUCTION POUR LA PRODUCTION DE CORPS CREUX AINSI QU'UN SYSTÈME POUR LA MISE EN OEUVRE DU PROCÉDÉ

(30) Priorität: 09.05.2023 DE 102023112021
(43) Veröffentlichungstag der Anmeldung: 13.11.2024
(73) Patentinhaber: KHS GmbH, 44143 Dortmund (DE)
(72) Erfinder: Lewin, Frank, 44143 Dortmund (DE); Fritsche, Claas, 44143 Dortmund (DE)
(74) Vertreter: Eisenführ Speiser

(56) Entgegenhaltungen:
- DE-A1- 102016 113 006
- DE-A1- 102020 103 583
- US-A1- 2017 252 960
- US-A1- 2022 032 528
- US-A1- 2022 307 989

## Beschreibung

Die Erfindung betrifft Bearbeitungslinien zur Bearbeitung von Hohlkörpern, wobei die Hohlkörper beispielsweise Vorformlingen oder Behältern entsprechen. Vorformlinge werden solche Hohlkörper genannt, die durch ein Urformverfahren, wie etwa ein Spritzgießverfahren, aus einem thermoplastischen Kunststoff hergestellt werden. Derartige Vorformlinge dienen als Rohlinge für die Herstellung von Behältern, wie Kunststoffflaschen, etwa zur Bereitstellung von Getränken. Dazu werden Vorformlinge üblicherweise zunächst temperaturkonditioniert, das heißt auf eine für eine Umformung geeignete Temperatur gebracht, und im Anschluss umgeformt, z. B. in einem Blasformverfahren, bei dem der zuvor temperierte Vorformling gegen eine äußere Form aufgeweitet wird. Der in der äußeren Form aufgenommene Vorformling wird z. B. mit einer Reckstange in Axialrichtung gestreckt und ein Druckfluid, z. B. ein Gas, in den Vorformling eingeleitet, um den Vorformling unter Druckbeaufschlagung auszudehnen, bis er eine innere Kontur der äußeren Form annimmt. Solche expandierten und gestreckten Vorformlinge können dann auch als Behälter bezeichnet werden. Solche Behälter werden dann beispielsweise in einem Abfüllprozess mit einer Flüssigkeit, wie einem Getränk, befüllt.

Bekannt ist auch, dass die Umformung durch das unter einem Umformdruck zugeführte Füllgut erfolgt, also die Expansion des Vorformlings in den Behälter simultan mit dem Befüllen erfolgt. Es ist auch bekannt, dass Vorformlinge vor ihrer Umformung weiteren Behandlungen bzw. Bearbeitungen unterzogen werden, z. B. einer Sterilisierung, oder dass fertig ausgeformte Behälter weitere Behandlungen bzw. Bearbeitungen erfahren, z. B. ein Etikettieren oder ein Verschließen nach einem Befüllen. Diese genannten Behandlungsverfahren sind als typische Beispiele für Bearbeitungen zu betrachten, die einzeln oder zu mehreren zeitlich nacheinander in einer Bearbeitungslinie erfolgen.

Die Bearbeitung von Hohlkörpern findet in einer Bearbeitungslinie z. B. in mehreren Bearbeitungsschritten statt. Zur Prüfung, ob ein Bearbeitungsschritt entlang der Bearbeitungslinie korrekt ausgeführt wurde, sind entlang der Bearbeitungslinie eine oder mehrere Inspektionseinrichtungen angeordnet, die Merkmale des Hohlkörpers prüfen. Inspektionseinrichtungen können auch zeitlich und örtlich vor einem Bearbeitungsschritt vorgesehen sein, um z. B. die Eignung des Hohlkörpers für die anstehende Bearbeitung festzustellen. Es kann dadurch verhindert werden, dass als fehlerhaft erkannte Hohlkörper in eine Behandlungsstation einlaufen, weil solche fehlerhaften Hohlkörper anderenfalls zu erheblichen Störungen führen könnten.

Den Inspektionseinrichtungen sind üblicherweise Ausleiteinheiten zugeordnet. Ausleiteinheiten dienen, um bei der Inspektion geprüfte Hohlkörper, die als fehlerhafte Hohlkörper erkannt wurden, aus der Bearbeitungslinie auszuleiten. Als Beispiel sei die Inspektion des Mündungsbereichs eines Hohlkörpers genannt, z. B. im Hinblick auf eine mögliche Deformation oder im Hinblick auf eine fehlerhafte Dichtfläche, an die z. B. ein Füllorgan ansetzen soll. Wird eine solche Deformation erkannt, die z. B. das zuverlässige Einführen eines Transportdornes verhindert, oder wird z. B. eine fehlerhafte Dichtfläche erkannt, die ein zuverlässiges und druckdichtes Ansetzen einer Fülldüse verhindert, so kann dieser als fehlerhaft erkannte Hohlkörper an einem Einlaufen in eine Bearbeitungseinrichtung oder in eine Transporteinrichtung gehindert werden, bevor aufgrund des Fehlers der Hohlkörper z. B. von einem Transportdorn oder einer Transportzange herabfallen kann oder bevor eine undicht aufsitzende Fülldüse Füllgut unter Druck zuführen kann und es zu einem Umherspritzen von Füllgut kommt. Beides könnte zu unerwünschten Störungen und damit verbundenen Produktionspausen führen.

Demnach werden von der Inspektionseinrichtung als fehlerhaft erkannte Hohlkörper an eine Ausleiteinheit gemeldet, damit diese Ausleiteinheit den fehlerhaften Hohlkörper aus der Bearbeitungslinie entfernt. Gemäß dem Stand der Technik kommt es vor, dass beim Ausführen des Ausleitvorgangs zum Ausleiten eines als fehlerhaft erkannten Hohlkörpers aus der Bearbeitungslinie ein Fehler auftritt und so der als fehlerhaft erkannte Hohlkörper entlang einer Förderrichtung weitertransportiert wird. Dies wird durch eine Ausleitauswertungseinheit festgestellt und die Bearbeitungslinie gestoppt, um den Hohlkörper manuell zu entfernen. Ein Entfernen ist nötig, da fehlerhafte Hohlkörper je nach Art des Fehlers zu massiven Problemen oder sogar auch zu einer Beschädigung nachfolgender Komponenten der Bearbeitungslinie führen können.

Demnach resultieren aus einem erfolglosen Ausleitvorgang Standzeiten einer gesamten Bearbeitungslinie, bei der die Bearbeitung nicht fortgesetzt werden kann. Solche Stillstandzeiten sind zu vermeiden, da ein vollständiger Produktionsstopp zu wirtschaftlichen Ausfällen führt. Darüber hinaus ist ein Wiederanfahren ein komplexer Vorgang, der teilweise mit hohem Personalaufwand betrieben werden muss. Teilweise ist auch erforderlich, dass bei einem Produktionsstopp bestimmte Bearbeitungseinrichtungen leergefahren werden müssen, da anderenfalls weitere Schäden drohen.

In der prioritätsbegründenden deutschen Patentanmeldung hat das Deutsche Patent- und Markenamt die folgenden Dokumente recherchiert: DE 10 2016 113 006 A1 und DE 10 2020 103 583 A1.

Ferner offenbart das Dokument US 2022/0307989 A1 ein System und ein Verfahren zur optischen Inspektion von Vorformlingen aus thermoplastischem Material. Das System umfasst ein Förderband mit seitlichen Führungen, die die Vorformlinge an ihrem Flansch halten und sie nacheinander entlang eines Inspektionspfads transportieren. Entlang dieses Pfads befindet sich eine Inspektionsstation mit mindestens einer Inspektionskamera, die Bilddaten von jeweils einem Vorformling aufnimmt. Das Förderband ist so ausgelegt, dass es zwei Betriebsmodi unterstützt: einen für Vorformlinge einer ersten Größe und einen für eine andere, zweite Größe. Ein Verstellantrieb ermöglicht das Umschalten zwischen diesen beiden Konfigurationen.

Das Dokument US 2022/0032528 A1 offenbart ein Verfahren zum Umgang mit festgehaltenen Vorformlingen, die während einer Produktionsunterbrechung in einer Heizstation fixiert sind. Die Vorformlinge folgen dabei einem Produktionsstrom, und die Heizstation umfasst eine Fördereinrichtung sowie eine Heizkammer, die von mindestens einer Reihe von Strahlern für monochromatische elektromagnetische Strahlung begrenzt ist. Das Verfahren sieht vor, kalte Vorformlinge, die vor der Bestrahlung durch die Strahler immobilisiert wurden, aus dem Produktionsstrom auszuschleusen und einem Recyclingstrom zuzuführen. Heiße Vorformlinge, die ganz oder teilweise der Strahlung ausgesetzt waren, werden hingegen einem separaten Ausschussstrom zugeführt.

Außerdem offenbart das Dokument US 2017/0252960 A1 eine Vorrichtung und Verfahren zum Transport von Vorformlingen im Bereich einer Blasformmaschine, insbesondere eine Sortiervorrichtung zum Transport von Vorformlingen aus thermoplastischem Material. Diese umfasst ein Transportrad mit mehreren Aufnahmen, die am Umfang verteilt sind und jeweils einen Vorformling aufnehmen und befördern. Ein Führungsring verläuft abschnittsweise um das Transportrad und hält die Vorformlinge in hängender Position zwischen Rad und Ring. Eine Auswahleinheit mit einem schwenkbaren Ausstoßerstern, der mehrere Ausstoßerarme besitzt, ermöglicht das gezielte Entfernen einzelner Vorformlinge aus den Aufnahmen. Der erste Ausstoßerarm verhindert im Ruhezustand das unbeabsichtigte Herausfallen der Vorformlinge. Bei Drehung stößt ein nachfolgender zweiter Ausstoßerarm gezielt einen zu entfernenden Vorformling aus der Aufnahme. Danach übernimmt dieser Arm wieder die Sicherung der vorbeilaufenden Vorformlinge gegen Herausfallen.

Aufgabe der vorliegenden Erfindung ist es daher, den Problemen des Standes der Technik zu begegnen. Insbesondere soll eine Möglichkeit gefunden werden, einen Stillstand einer Bearbeitungslinie zu vermeiden, wenn das Ausleiten eines fehlerhaften Hohlkörpers erfolgslos geblieben ist. Jedenfalls soll eine Alternative zum aus dem Stand der Technik Bekannten gefunden werden.

Hierzu betrifft die Erfindung ein Verfahren zum Ausleiten von fehlerhaften Hohlkörpern aus einer Bearbeitungslinie nach Anspruch 1.

Die Erfindung betrifft ein Verfahren zum Ausleiten von fehlerhaften Hohlkörpern aus einer Bearbeitungslinie, die zur Bearbeitung von Hohlkörpern dient.

Hohlkörper sind gemäß der Erfindung insbesondere Vorformlinge oder Behälter. Vorformlinge dienen zur Herstellung von Behältern aus einem thermoplastischen Kunststoff, wie z. B. Polyethylenterephthalat, kurz PET, und werden vor einem Umformverfahren durch einen vorangestellten Arbeitsschritt hergestellt. Vorformlinge werden beispielsweise durch konventionelles Spritzgießen hergestellt. Die fertigen Vorformlinge werden zur Herstellung von Behältern, wie Flaschen, zunächst aufgeheizt, insbesondere durch Infrarotstrahler, und in eine äußere Form überführt.

Es sind auch sogenannte Einstufenverfahren bekannt, bei denen der Vorformling unmittelbar nach seiner spritzgusstechnischen Herstellung dem Umformprozess zugeführt wird. Bei den sogenannten Zweistufenverfahren sind die spritzgusstechnische Herstellung und die Umformung zeitlich getrennt, so dass die Umformung nicht unmittelbar nach der spritzgusstechnischen Herstellung erfolgt, sondern der hergestellte Vorformling zunächst erkältet und zu einem späteren Zeitpunkt auf eine Umformungstemperatur aufgeheizt wird.

Sowohl Einstufen- als auch Zweistufenverfahren sind im Stand der Technik hinlänglich bekannt. Grundsätzlich bekannt sind im Stand der Technik auch unterschiedliche Umformverfahren, sowohl unter Verwendung einer Reckstange als auch ohne Verwendung einer Reckstange. Es ist im Stand der Technik auch bekannt, bei diesen Umformverfahren ein gasförmiges Fluid, z. B. Druckluft, oder ein flüssiges Umformfluid zu verwenden, z. B. ein Füllgut.

Ein wie vorstehend z. B. mit einem gasförmigen Umformfluid aus einem Vorformling hergestellter Behälter kann beispielsweise zur Abfüllung von Getränken dienen. Demnach betrifft die Erfindung auch Behälter, wie Flaschen, die insbesondere aus Vorformlingen hergestellt sind. Die Hohlkörper umfassen demnach vorzugsweise Hohlkörper aus einem thermoplastischen Kunststoff, z. B. aus PET. Die Vorformlinge werden auch als "Preforms" bezeichnet.

Eine Bearbeitungslinie entspricht in der Regel einer Reihe von aufeinanderfolgenden Einrichtungen zur Bearbeitung von Hohlkörpern, eine Bearbeitungslinie kann aber auch aus nur einer Einrichtung zur Bearbeitung von Hohlkörpern bestehen. Derartige Bearbeitungseinrichtungen umfassen beispielsweise Vorrichtungen, um das bereits genannte Umformverfahren auszuführen. Weitere Vorrichtungen in der Bearbeitungslinie können Abfüllstationen zum Befüllen der Hohlkörper, beispielsweise mit einem Getränk, Vorrichtungen zum Etikettieren der Hohlkörper und Vorrichtungen zum Verschließen der Hohlkörper umfassen. Auch Sortiervorrichtungen, Reinigungsvorrichtungen oder Sterilisiervorrichtungen können eine solche Einrichtung sein. Die vorstehende Auflistung an Vorrichtungen ist nicht abschließend und beispielhaft gemeint.

Die einzelnen Vorrichtungen einer Bearbeitungslinie sind durch Fördereinrichtungen eines Fördersystems verbunden, das auch Fördereinrichtungen innerhalb der Bearbeitungseinrichtungen umfassen kann, um so die Hohlkörper vorzugsweise kontinuierlich von einem Anfang der Bearbeitungslinie bis zu einem Ende der Bearbeitungslinie in einer Förderrichtung zu fördern. Fördereinrichtungen des Fördersystems entsprechen demnach Fördereinrichtungen innerhalb von Bearbeitungseinrichtungen der Bearbeitungslinie oder Fördereinrichtungen, die zwischen einzelnen Bearbeitungseinrichtungen der Bearbeitungslinie zum Fördern der Hohlkörper von einer Bearbeitungseinrichtung zur nächsten Bearbeitungseinrichtung dienen. Eine Fördereinrichtung umfasst beispielsweise mehrere sich in Förderrichtung bewegende Zangen oder Halterungen jeweils zum Halten eines Hohlkörpers. Eine Fördereinrichtung kann auch einem Förderband entsprechen. Typische Fördereinrichtungen sind Transporträder mit umfangsbeabstandeten, darauf angeordneten Fördertaschen oder Förderzangen oder geförderter Dornen oder umlaufende Förderketten mit Transportdornen als Kettengliedern, wie sie z. B. für Heizeinrichtungen für Vorformlinge bekannt sind. Auch diese Aufzählung ist rein beispielhaft und nicht abschließend. Es sind im Stand der Technik eine Vielzahl solcher Fördereinrichtungen bekannt.

Ein Bearbeiten der Hohlkörper umfasst demnach sämtliche Schritte, die mit den genannten Hohlkörpern in einer Bearbeitungslinie ausführbar sind. Demnach umfasst das Bearbeiten des Hohlkörpers ein Erwärmen, ein Umformen, ein Befüllen, ein Etikettieren, ein Beschriften, ein Verschließen und dergleichen. Auch diese Aufzählung ist rein beispielhaft und nicht abschließend.

Gemäß der Erfindung umfasst das Verfahren ein Fördern mehrerer Hohlkörper entlang der Bearbeitungslinie in einer Förderrichtung. Ferner wird mit einer ersten Inspektionseinrichtung der Bearbeitungslinie jeder Hohlkörper geprüft. Eine Inspektionseinrichtung umfasst beispielsweise eine Kameraeinrichtung, mit der eine Bildaufnahme des Hohlkörpers aufgenommen wird. Ferner kann die Inspektionseinrichtung beliebige andere oder weitere Messmittel und Messverfahren nutzen, um beispielsweise eine Oberfläche, eine Wandung, eine Form oder eine sonstige Eigenschaft des Hohlkörpers zu erfassen. Solche Inspektionseinrichtungen sind im Stand der Technik ebenfalls in einer Vielzahl bekannt.

Ein Beispiel für die Anordnung und Funktion einer Inspektionseinrichtung ist eine solche Inspektionseinrichtung, die nach Übergabe der Vorformlinge in die Blasmaschine die Vorformlinge z. B. auf Fehler im Mündungsbereich untersucht. Merkmale, die geprüft werden, umfassen beispielsweise einen Bereich der Dichtflächen, Bereiche des Gewindes, Bereiche des Handhabungsrings, Verunreinigungen im Boden oder innerhalb des Hohlkörpers oder eine geometrische Ausbildung des Hohlkörpers. Beispielsweise werden fehlerhaft gekrümmte Vorformlinge, die während der Erwärmung mit Heizern, wie z. B. Infrarotstrahlern in Kontakt gelangen können, erkannt. Weiterhin ist es möglich, auf einem Umlenkrad einer Heizvorrichtung die Farbe und Länge des Vorformlings zu untersuchen oder auch deren Seitenfläche.

Ferner umfasst das Verfahren ein Erkennen, ob der mit der Inspektionseinrichtung jeweils geprüfte Hohlkörper einem fehlerhaften Hohlkörper oder einem fehlerfreien Hohlkörper entspricht. Das Erkennen erfolgt mit einer ersten Auswerteinheit, die der ersten Inspektionseinrichtung zugeordnet ist. Eine Auswerteinheit ist demnach als Bestandteil der Inspektionseinrichtung zu betrachten oder entspricht beispielsweise einem Teil einer Steuerung zum Steuern des Verfahrens, in dem mit einem Prozessor aus den mit der Inspektionseinrichtung aufgenommenen Daten, beispielsweise Bilddaten, erkannt wird, ob der geprüfte Hohlkörper bezüglich eines oder mehrerer Merkmale den gewünschten Anforderungen entspricht oder nicht. Beim Beispiel der Bilddaten kann die Auswerteinheit beispielsweise eine Bildverarbeitung umfassen, bei der das vom Hohlkörper aufgenommene Bild mit einem Referenzbild verglichen wird oder Geometriedaten aus dem vom Hohlkörper aufgenommenen Bild extrahiert und mit Referenzdaten verglichen werden. Die Auswerteeinheit kann in die Inspektionseinrichtung integriert sein, direkt an der Inspektionseinrichtung angeordnet sein oder aber auch entfernt von der Inspektionseinrichtung angeordnet sein, z. B. zentral in einem Bereich, in dem weitere Auswerte- oder Steuereinheiten angeordnet sind.

Ferner betrifft die Erfindung ein Ausführen eines ersten Ausleitvorgangs. Der Ausleitvorgang dient zum Ausleiten eines als fehlerhaft mit der ersten Auswerteinheit erkannten Hohlkörpers aus der Bearbeitungslinie. Die erste Ausleiteinheit ist in der Förderrichtung auf die erste Inspektionseinrichtung folgend angeordnet, z. B. unmittelbar danach folgend oder in einigem Abstand folgend. Eine Ausleiteinheit dient dem Entfernen eines Hohlkörpers aus der Abfolge der Hohlkörper. Bekannt sind z. B. sogenannte Auswerfer, in denen als fehlerhaft erkannte Hohlkörper mechanisch ausgeworfen werden. Bekannt ist auch, dass als fehlerhaft erkannte Hohlkörper mit einem Druckluftstoß aus dem Fördersystem ausgeworfen werden. Auch ein Herausstoßen mit einem Hebel aus dem Fördersystem durch eine Ausleiteinheit ist möglich. Gemäß einem weiteren Beispiel erfolgt das Ausleiten durch Fallenlassen des als fehlerhaft erkannten Vorformlings, z. B. durch Öffnen einer Zange oder durch Lösen einer Haltekraft einer Halteeinrichtung des Fördersystems, die oder das einen fehlerhaften Hohlkörper hält.

Die erste Ausleiteinheit ist demnach in der Förderrichtung nach der ersten Inspektionseinrichtung angeordnet, wobei die Erfindung nicht darauf beschränkt ist, dass die erste Ausleiteinheit unmittelbar oder direkt nach der ersten Inspektionseinrichtung angeordnet ist. Auf die erste Inspektionseinrichtung folgend bezeichnet demnach lediglich, dass die erste Ausleiteinheit nach der ersten Inspektionseinrichtung in der Förderrichtung entlang der Bearbeitungslinie angeordnet ist, wobei gemäß besonderer Ausführungsformen beispielsweise ein oder mehrere Komponenten, wie Bearbeitungseinrichtungen, zwischen der ersten Inspektionseinrichtung und der ersten Ausleiteinheit angeordnet sein können.

Gemäß dem Verfahren wird in einem nächsten Schritt mit einer ersten Ausleitauswertungseinheit geprüft, ob der erste Ausleitvorgang mit der ersten Ausleiteinheit erfolgreich oder erfolglos ausgeführt wurde. Ein erfolgreicher, also erfolgreich ausgeführter, Ausleitvorgang bezeichnet demnach das Ausführen eines ersten Ausleitvorgangs, der dazu geführt hat, dass der als fehlerhaft erkannte Hohlkörper aus der Bearbeitungslinie entfernt wurde. Ein erfolgloser, also erfolglos ausgeführter, erster Ausleitvorgang entspricht demnach einem ersten Ausleitvorgang, bei dem der als fehlerhaft erkannte Hohlkörper trotz Ausführen des ersten Ausleitvorgangs weiterhin entlang der Bearbeitungslinie mit dem Fördersystem weitergefördert wird.

Gemäß dem Verfahren erfolgt in einem nächsten Schritt ein Senden eines ersten Signals, das einen Ausleitfehlversuch anzeigt, wenn der erste Ausleitvorgang erfolglos ausgeführt wurde. Das erste Signal zeigt demnach einen Fehlerversuch des Ausleitens an und wird von der ersten Ausleitauswertungseinheit an eine zweite Ausleiteinheit gesendet. Die zweite Ausleiteinheit ist in der Förderrichtung folgend auf die erste Ausleiteinheit angeordnet. Dieses Senden eines ersten Signals an eine zweite Ausleiteinheit kann in der Praxis z. B. bedeuten, dass eine Steuereinrichtung der zweiten Ausleiteinheit ein Signal erhält, dass der Ausleitversuch der ersten Ausleiteinheit erfolglos verlaufen ist. Diese Steuereinrichtung der zweiten Ausleiteinheit, z. B. eine Steuereinheit, muss nicht unmittelbar in die zweite Ausleiteinheit integriert sein, sondern kann auch entfernt von der zweiten Ausleiteinheit angeordnet sein. Sie ist ihr steuerungslogisch zugeordnet, indem sie die Steuerung der zweiten Ausleiteinheit übernimmt.

Ferner wird gemäß dem Verfahren ein zweiter Ausleitvorgang zum Ausleiten des als fehlerhaft erkannten Hohlkörpers aus der Bearbeitungslinie mit der zweiten Ausleiteinheit ausgeführt, wenn das den Ausleitfehlerversuch anzeigende erste Signal von der zweiten Ausleiteinheit empfangen wird. In dem Fall, dass also die zweite Ausleiteinheit das Signal von der ersten Ausleitauswertungseinheit empfängt, das einen Ausleitfehlversuch, also einen erfolglos ausgeführten ersten Ausleitvorgang anzeigt, wird demnach mit der zweiten Ausleiteinheit ein zweiter Ausleitvorgang ausgeführt.

Durch das Verfahren wird somit ein zweiter Ausleitvorgang bereitgestellt, um fehlerhafte Hohlkörper auszuleiten, die nicht bereits bei einem ersten Ausleitvorgang erfolgreich ausgeleitet werden konnten. Die Wahrscheinlichkeit einen fehlerhaften Hohlkörper bei zwei Ausleitversuchen aus der Bearbeitungslinie erfolgreich auszuleiten, wird somit erhöht. So kann die Anzahl von Stopps einer Bearbeitungslinie zum manuellen Entfernen eines fehlerhaften Hohlkörpers reduziert werden. Die genannten Probleme durch ein Stoppen oder Anhalten der Bearbeitungslinie können somit reduziert werden.

Gemäß einer ersten Ausführungsform ist eine zweite Ausleitauswertungseinheit vorgesehen, die der zweiten Ausleiteinheit zugeordnet ist. Mit der zweiten Ausleitauswertungseinheit wird geprüft, ob der zweite Ausleitvorgang erfolgreich oder erfolgslos ausgeführt wurde. Die zweite Ausleitauswertungseinheit prüft demnach, ob der mit der ersten Inspektionseinrichtung als fehlerhaft erkannte Hohlkörper aus der Bearbeitungslinie, also aus dem Fördersystem, entfernt wurde und somit der zweite Ausleitvorgang erfolgreich war, oder ob der mit der ersten Inspektionseinrichtung als fehlerhaft erkannte Hohlkörper weiterhin durch das Fördersystem weitergefördert wird und in der Bearbeitungslinie verblieben ist, also der zweite Ausleitvorgang erfolglos ausgeführt wurde.

Gemäß dieser Ausführungsform wird gemäß einer ersten Alternative ein zweites Signal von der zweiten Ausleitauswertungseinheit erzeugt, das einen Ausleitfehlversuch der zweiten Ausleiteinheit anzeigt, wenn der zweite Ausleitvorgang erfolglos geblieben ist. Das Signal, das den Ausleitfehlversuch anzeigt, wird von der zweiten Ausleitauswertungseinheit an eine dritte Ausleiteinheit gesendet. Die dritte Ausleiteinheit ist in Förderrichtung auf die zweite Ausleiteinheit folgend angeordnet. Es kann somit ein dritter Ausleitvorgang mit der dritten Ausleiteinheit in Abhängigkeit vom zweiten Signal ausgeführt werden. Gemäß einer Alternative zu dieser Ausführungsform wird die Bearbeitungslinie gestoppt, wenn von der zweiten Ausleitauswertungseinheit ein erfolglos ausgeführter zweiter Ausleitvorgang erkannt wird. Das Stoppen der Bearbeitungslinie dient z. B. zum manuellen Entfernen des als fehlerhaft erkannten Hohlkörpers aus der Bearbeitungslinie.

Durch das Bereitstellen eines zweiten Signals für eine dritte Ausleiteinheit für einen dritten Ausleitvorgang wird die Wahrscheinlichkeit eines sicheren Entfernens eines als fehlerhaft erkannten Hohlkörpers aus der Bearbeitungslinie weiter erhöht oder durch Stoppen sichergestellt, dass der als fehlerhaft erkannte und trotz zwei Ausleitversuchen noch in der Bearbeitungslinie befindliche Hohlkörper beispielsweise zu Problemen in einem Bearbeitungsschritt in einer Bearbeitungseinrichtung der Bearbeitungslinie führt.

Gemäß einer weiteren Ausführungsform folgt die zweite Ausleiteinheit unmittelbar auf die erste Ausleiteinheit oder auf die der ersten Ausleiteinheit zugeordneten ersten Ausleitauswertungseinheit in Förderrichtung der Bearbeitungslinie. Die zweite Ausleiteinheit folgt demnach unmittelbar auf die erste Ausleiteinheit und die erste Ausleitauswertungseinheit, wenn diese beiden genannten Einheiten als separate Vorrichtungen ausgeführt und beispielsweise in der Förderrichtung nacheinander angeordnet sind.

Die Ausleitauswertungseinheit kann beispielsweise eine Lichtschranke umfassen, die in der Bearbeitungslinie prüft, ob der als fehlerhaft erkannte Hohlkörper nicht mehr in der Bearbeitungslinie enthalten ist. Die Ausleitauswertungseinheit kann aber auch an einem Zweig angeordnet sein, der ausgeleitete Hohlkörper führt, so dass die Ausleitauswertungseinheit nicht Teil des Fördersystems selbst, sondern eines Abzweigs des Fördersystems wäre. In diesem Fall folgt die zweite Ausleiteinheit unmittelbar auf die erste Ausleiteinheit. Gemäß einer weiteren Alternative können Ausleiteinheit und Ausleitauswertungseinheit als eine gemeinsame Einheit ausgebildet sein.

Der zweite Ausleitvorgang kann somit im Bedarfsfall unmittelbar nach der erfolglosen Ausführung des ersten Ausleitvorgangs erfolgen. Es sind demnach keine weiteren Bearbeitungsschritte oder Inspektionsschritte zwischen der ersten und zweiten Ausleiteinheit vorgesehen. Unmittelbar bedeutet demnach, dass die erste Ausleiteinheit direkt nach der zweiten Ausleiteinheit in Förderrichtung folgt und vorzugsweise die erste Ausleiteinheit und die zweite Ausleiteinheit an einer gemeinsamen Fördereinrichtung bereitgestellt sind. Demnach kann das Verfahren ermöglicht werden, indem eine zweite Ausleiteinheit in eine bestehende Bearbeitungslinie nach der ersten Ausleiteinheit eingefügt wird. Der zusätzliche Installationsaufwand für die zweite Ausleiteinheit reduziert die Wahrscheinlichkeit eines Stoppens der Bearbeitungslinie.

Gemäß einer weiteren Ausführungsform folgt die zweite Ausleiteinheit in Förderrichtung auf eine zweite Inspektionseinrichtung. Die zweite Inspektionseinrichtung ist vorzugsweise nach der ersten Inspektionseinrichtung und nach der ersten Ausleiteinheit angeordnet. Gemäß einer speziellen Ausführungsform kann entlang der Förderrichtung eine erste Inspektionseinrichtung, drauf folgend eine erste Ausleiteinheit, darauf vorzugsweise folgend wenigstens eine Bearbeitungseinrichtung, darauf folgend eine zweite Inspektionseinrichtung und darauf folgend die zweite Ausleiteinheit angeordnet sein. Jedenfalls ist eine zweite Inspektionseinrichtung zwischen der ersten Ausleiteinheit und der zweiten Ausleiteinheit angeordnet.

Gemäß der letztgenannten Ausführungsform wird eine zweite Ausleiteinheit, die einer zweiten Inspektionseinrichtung zugeordnet ist, für das Verfahren verwendet. Die zweite Ausleiteinheit, die in einer bestehenden Bearbeitungslinie zum Ausleiten von mit der zweiten Inspektionseinrichtung als fehlerhaft erkannten Hohlkörpern verwendet wurde, wird somit auch bzw. zusätzlich verwendet, um von der ersten Inspektionseinrichtung als fehlerhaft erkannte Hohlkörper auszuleiten, wenn ein erster Ausleitvorgang erfolglos geblieben ist. Demnach wird durch das Bereitstellen des den Ausleitfehlversuch anzeigenden ersten Signals für die zweite Ausleiteinheit ermöglicht das Verfahren auszuführen, ohne dass eine zusätzliche Ausleiteinheit in eine bestehende Bearbeitungslinie integriert werden muss. Die zweite Ausleiteinrichtung fungiert also einerseits für das Ausleiten der von der zweiten Inspektionseinrichtung als fehlerhaft erkannten Hohlkörper. Dies kann als ihre originäre Aufgabe verstanden werden. Andererseits leitet die zweite Ausleiteinrichtung auch solche Hohlkörper aus, die von der ersten Inspektionseinrichtung als fehlerhaft erkannt wurden, aber von der ersten Ausleiteinheit nicht ausgeleitet werden konnten. Diese weitere Aufgabe führt die zweite Ausleiteinrichtung aus, wenn sie ein entsprechendes Signal erhält, nämlich wenn die erste Ausleitauswertungseinheit feststellt, dass der erste Ausleitversuch fehlgeschlagen ist.

Gemäß einer weiteren Ausführungsform wird mit der ersten Inspektionseinrichtung mindestens ein erstes Merkmal des Hohlkörpers geprüft. Mit der zweiten Inspektionseinrichtung wird mindestens ein zweites Merkmal des Hohlkörpers geprüft. Das zweite Merkmal unterscheidet sich vom ersten Merkmal. Das erste und das zweite Merkmal sind z. B. für einen nachfolgenden Bearbeitungsschritt wichtige Merkmale in dem Sinne, dass deren Nichterfüllung zu Problemen oder Störungen führen kann. Ein Hohlkörper soll demnach je nach Bearbeitungsschritt eine bestimmte Ausprägung unterschiedlicher Merkmale aufweisen. Merkmale sind beispielsweise Größe, Form, Ausrichtung, Dicke der Wandungen und dergleichen Eigenschaften des Hohlkörpers. Die zwei Inspektionseinrichtungen dienen demnach dazu, unterschiedliche Merkmale des Hohlkörpers zu prüfen.

Gemäß dieser Ausführungsform umfasst das Verfahren ferner ein Erkennen mit der ersten Inspektionseinrichtung oder deren Auswerteeinheit, ob der Hohlkörper einem fehlerhaften Hohlkörper oder einem fehlerfreien Hohlkörper bezüglich des ersten Merkmals entspricht, und ein Erkennen mit der zweiten Inspektionseinrichtung oder deren Auswerteinheit, ob der Hohlkörper einem fehlerhaften Hohlkörper oder einem fehlerfreien Hohlkörper bezüglich des zweiten Merkmals entspricht. Ein zweiter Ausleitvorgang wird demnach mit der zweiten Ausleiteinheit ausgeführt, wenn erkannt wird, dass der Hohlkörper bezüglich des zweiten Merkmals fehlerhaft ist, oder wenn erkannt wird, dass der Hohlkörper bezüglich des ersten Merkmal fehlerhaft ist und zudem ein erster Ausleitvorgang erfolglos war.

Eine bestehende zweite Ausleiteinheit kann somit verwendet werden, um nach bestimmungsgemäßem Gebrauch mit der zweiten Inspektionseinrichtung erkannte fehlerhafte Hohlkörper auszuleiten, aber auch um die Wahrscheinlichkeit eines erfolgreichen Ausleitversuchs von mit der ersten Inspektionseinrichtung als fehlerhaft erkannten Hohlkörpern zu erhöhen.

Gemäß einer weiteren Ausführungsform sind entlang der Förderrichtung mehrere Inspektionseinrichtungen, mehrere Ausleiteinheiten, vorzugsweise mehrere Bearbeitungseinrichtungen angeordnet, und eine Steuerung zum Steuern zumindest der mehreren Inspektionseinrichtungen und Ausleiteinheiten ist vorgesehen. Diese Steuerung ist im Sinne einer Steuereinrichtung zu verstehen.

Mit der Steuerung sind mehrere oder alle der mehreren in Förderrichtung auf eine der mehreren Inspektionseinrichtungen folgende Ausleiteinheiten zum Ausführen eines Ausleitvorgangs eines fehlerhaften Hohlkörpers ansteuerbar. Eine Ansteuerung erfolgt dabei solange, bis ein Ausleitvorgang eines als fehlerhaft erkannten Hohlkörpers erfolgreich ist. Demnach ist die Steuerung eingerichtet, um mehrere oder alle Ausleiteinheiten, insbesondere mit einem Signal, das Ausleitfehlversuche anzeigt, anzusteuern, so dass ein fehlerhafter Hohlkörper, der bezüglich eines Merkmals mit einer der Inspektionseinrichtungen als fehlerhaft erkannt wird, solange versucht wird auszuleiten, bis der Ausleitvorgang erfolgreich ist.

Vorzugsweise sind in der Steuerung ein vordefiniertes Kriterium oder mehrere vordefinierte Kriterien hinterlegt. Ein vordefiniertes Kriterium ist vorzugsweise für mehrere oder jede der Bearbeitungseinrichtungen jeweils hinterlegt. Das Kriterium zeigt an, welche Merkmale oder welches Merkmal des Hohlkörpers, insbesondere von Merkmalen, die mit einer Inspektionseinrichtung vor der Bearbeitung mit der jeweiligen Bearbeitungseinrichtung geprüft werden, für die jeweilige Bearbeitungseinrichtung oder die jeweiligen Bearbeitungseinrichtungen fehlerfrei sein müssen oder fehlerhaft sein dürfen. Jeder Bearbeitungseinrichtung oder mehreren Bearbeitungseinrichtungen ist somit jeweils eines von mehreren vordefinierten Kriterien zugeordnet, das anzeigt, welche Merkmale eines Hohlkörpers fehlerfrei sein müssen oder fehlerhaft sein dürfen, damit eine Bearbeitung in der Bearbeitungseinrichtung ausgeführt werden darf bzw. kann.

Das Kriterium zeigt demnach an, ob eine Bearbeitung mit der Bearbeitungseinrichtung zu einem Fehler in der Bearbeitungseinrichtung führen kann, wenn ein Hohlkörper einen Fehler bezüglich eines Merkmals aufweist, oder ob ein solcher Fehler zu keinem Problem bei der Bearbeitung mit der Bearbeitungseinrichtung führen wird. Die Steuerung stoppt die Bearbeitungslinie, bevor ein fehlerhafter Hohlkörper, der das Kriterium einer Bearbeitungseinrichtung nicht erfüllt, die entsprechende Bearbeitungseinrichtung erreicht.

Es werden demnach gemäß dieser Ausführungsform Ausleitvorgänge eines fehlerhaften Hohlkörpers solange unternommen, bis der fehlerhafte Hohlkörper zu einer Bearbeitungseinrichtung gefördert wird, deren Kriterium er nicht erfüllt, also einen Fehler bezüglich eines Merkmals aufweist, das in der Bearbeitungseinrichtung zu einem Problem führen kann. In diesem Fall stoppt die Bearbeitungslinie, um so ein Problem in der Bearbeitungseinrichtung zu vermeiden.

Demnach dient die Erfindung dazu, vorzugsweise ohne ein Stoppen der Bearbeitungslinie kontinuierlich Ausleitversuche für fehlerhafte Hohlkörper auszuführen, wobei jedoch berücksichtigt wird, dass fehlerhafte Hohlkörper, die auch nach mehreren Ausleitversuchen in der Bearbeitungslinie verbleiben, nicht zwingend zu Problemen in den Bearbeitungseinrichtungen führen. Die Art des Fehlers und die Art der Bearbeitungseinrichtung werden berücksichtigt.

Gemäß einer weiteren Ausführungsform wird im Fall eines ausgeleiteten fehlerhaften Hohlkörpers oder nach dem Erkennen des fehlerhaften Hohlkörpers eine der Positionen des fehlerhaften Hohlkörpers zugeordnete Bearbeitungsstation einer oder aller Bearbeitungseinrichtungen deaktiviert. Demnach sind Bearbeitungseinrichtungen vorgesehen, die mehrere Bearbeitungsstationen aufweisen. Jede Bearbeitungsstation bearbeitet einen Hohlkörper, wobei mehrere Hohlkörper in einer Bearbeitungseinrichtung mit mehreren Bearbeitungsstationen zeitlich im Wesentlichen parallel bearbeitet werden können. Wird nun ein Hohlkörper aus der Bearbeitungslinie entfernt, also ausgeleitet, so ist an der ursprünglichen Position des fehlerhaften Hohlkörpers kein zu bearbeitender Hohlkörper mehr vorhanden. Die dieser Position zugeordnete Bearbeitungsstation wird demnach gemäß dieser Ausführungsform deaktiviert.

Beispielsweise wird eine Reihe von aufeinander im Fördersystem folgenden Behältern gefördert, wobei eine Position keinen Behälter aufweist, da der Behälter, der an dieser Position angeordnet war, aufgrund eines fehlerhaften Merkmals ausgeleitet wurde. Werden die Behälter nun in eine Bearbeitungseinrichtung eingeführt, die beispielsweise einer Abfülleinrichtung entspricht, würde die der Position des fehlenden Behälters zugeordnete Bearbeitungsstation, wenn sie nicht deaktiviert wäre, versuchen, eine Flüssigkeit an die Position abzugeben, an der der fehlerhafte Hohlkörper zuvor im Fördersystem enthalten war. Die Flüssigkeit würde somit ins Leere abgelassen werden. Dies wird nach der bevorzugten Ausführungsform vermieden, indem die betroffene Abfüllstation ohne zugeführtem Behälter deaktiviert wird. Deaktiviert bedeutet im vorliegenden Beispiel, dass kein Füllvorgang ausgeführt wird, oder verallgemeinernd gesprochen, dass der Bearbeitungsschritt der Bearbeitungsstation nicht ausgeführt wird.

Selbst wenn eine Bearbeitungseinrichtung an ihren Bearbeitungsstationen selbstständig eine Prüfung auf ein Vorhandensein oder Nichtvorhandensein eines Hohlkörpers ausführen würde, könnte diese Prüfung fehlerhaft sein. Durch Deaktivieren der Bearbeitungsstationen bereits beim Erkennen des fehlerhaften Hohlkörpers kann somit ein doppelter Schutz gegen versehentliches Bearbeiten einer nicht besetzten Position erfolgen.

Ferner umfasst die Erfindung eine Steuerung zum Ausleiten von fehlerhaften Hohlkörpern aus einer Bearbeitungslinie zur Bearbeitung von Hohlkörpern. Die Steuerung umfasst eine erste Auswerteinheit, die einer ersten Inspektionseinrichtung zugeordnet ist. Die Auswerteinheit ist eingerichtet um zu erkennen, ob ein mit der Inspektionseinrichtung geprüfter Hohlkörper einem fehlerhaften Hohlkörper oder einem fehlerfreien Hohlkörper entspricht. Außerdem ist die Auswerteinheit eingerichtet, eine Ausleiteinheit anzusteuern, die in einer Förderrichtung auf die Inspektionseinrichtung folgt. Die Steuerung dient zum Ansteuern der Ausleiteinheit zum Ausführen eines ersten Ausleitvorgangs zum Ausleiten eines erkannten fehlerhaften Hohlkörpers aus der Bearbeitungslinie.

Ferner ist eine erste Ausleitauswertungseinheit der Steuerung vorgesehen, die eingerichtet ist, um zu prüfen, ob der erste Ausleitvorgang erfolgreich oder erfolglos ausgeführt wurde. Ferner ist die erste Ausleitauswertungseinheit eingerichtet, ein einen Ausleitfehlversuch anzeigendes erstes Signal an mindestens eine in der Förderrichtung auf die erste Ausleiteinheit folgende zweite Ausleiteinheit zu senden, wenn ein erster Ausleitvorgang erfolglos ausgeführt wurde. Demnach dient die Ausleitauswertungseinheit zum Ansteuern einer Ausführung eines zweiten Ausleitvorgangs mit einer zweiten Ausleiteinheit, die das erste Signal mit dem Ausleitfehlversuch empfangen hat, um bei der Ausführung eines zweiten Ausleitvorgangs einen erkannten fehlerhaften Hohlkörper aus der Bearbeitungslinie auszuleiten.

Die Steuerung ist ferner eingerichtet, ein Verfahren nach einer der vorgenannten Ausführungsformen auszuführen.

Außerdem betrifft die Erfindung ein System zum Ausleiten von fehlerhaften Hohlkörpern aus einer Bearbeitungslinie zur Bearbeitung von Hohlkörpern. Das System weist vorzugsweise eine Steuerung nach einer der vorgenannten Ausführungsformen auf. Vorzugsweise ist das System eingerichtet, um eine Ausführungsform des Verfahrens auszuführen.

Das erfindungsgemäße System umfasst ein Fördersystem zum Fördern mehrerer Hohlkörper entlang der Bearbeitungslinie. Das Fördersystem umfasst vorzugsweise mehrere Fördereinrichtungen. Außerdem umfasst das System eine erste Inspektionseinrichtung zum Prüfen jedes Hohlkörpers und eine der ersten Inspektionseinrichtung zugeordnete erste Auswerteinheit. Die Auswerteinheit dient zum Erkennen, ob der jeweils geprüfte Hohlkörper einem fehlerhaften Hohlkörper oder einem fehlerfreien Hohlkörper entspricht.

Außerdem umfasst das System eine erste Ausleiteinheit, die in der Förderrichtung auf die erste Inspektionseinrichtung folgt. Die erste Ausleiteinheit dient zum Ausführen eines ersten Ausleitvorgangs zum Ausleiten eines als fehlerhaft erkannten Hohlkörpers aus der Bearbeitungslinie. Zudem umfasst das System eine erste Ausleitauswertungseinheit, die der ersten Ausleiteinheit zugeordnet ist. Die erste Ausleitauswertungseinheit dient zum Prüfen, ob der erste Ausleitvorgang erfolgreich oder erfolglos ausgeführt wurde.

Außerdem umfasst das System mindestens eine in der Förderrichtung auf die erste Ausleiteinheit folgende zweite Ausleiteinheit. Die erste Ausleitauswertungseinheit ist eingerichtet, ein erstes Signal, das einen Ausleitfehlversuch anzeigt, an die zweite Ausleiteinheit zu senden, wenn ein erster Ausleitvorgang erfolglos ausgeführt wurde. Die zweite Ausleiteinheit ist eingerichtet, im Fall des Empfangs des den Ausleitfehlversuch anzeigenden ersten Signals einen zweiten Ausleitvorgang zum Ausleiten des erkannten fehlerhaften Hohlkörpers aus der Bearbeitungslinie auszuführen.

Gemäß einer Ausführungsform des Systems ist eine zweite Ausleitauswertungseinheit des Systems vorgesehen, die der zweiten Ausleiteinheit zugeordnet ist. Die zweite Ausleitauswertungseinheit dient zum Prüfen, ob der zweite Ausleitvorgang erfolgreich oder erfolglos ausgeführt wurde. Das System weist außerdem eine auf die zweite Ausleiteinheit folgende dritte Ausleiteinheit auf, wobei die zweite Ausleitauswertungseinheit eingerichtet ist, im Fall eines erfolglos ausgeführten zweiten Ausleitvorgangs ein zweites Signal, das einen Ausleitfehlversuch anzeigt, von der zweiten Ausleitauswertungseinheit an die dritte Ausleiteinheit zu senden. Gemäß einer Alternative zur Bereitstellung einer dritten Ausleiteinheit und des zweiten Signals ist die zweite Ausleitauswertungseinheit eingerichtet, die Bearbeitungslinie zum manuellen Entfernen des zum Ausleiten erkannten fehlerhaften Hohlkörpers aus der Bearbeitungslinie zu stoppen.

Gemäß einer weiteren Ausführungsform folgt die zweite Ausleiteinheit unmittelbar auf die erste Ausleiteinheit oder die der ersten Ausleiteinheit zugeordnete erste Ausleitauswertungseinheit in der Förderrichtung. Gemäß einer weiteren Ausführungsform weist das System eine zweite Inspektionseinrichtung auf. Die zweite Ausleiteinheit folgt in Förderrichtung auf die zweite Inspektionseinrichtung, so dass die zweite Inspektionseinrichtung somit in Förderrichtung nach der ersten Ausleiteinheit und vor der zweiten Ausleiteinheit angeordnet ist.

Gemäß einer weiteren Ausführungsform des Systems ist die erste Inspektionseinrichtung eingerichtet, mindestens ein erstes Merkmal des Hohlkörpers zu prüfen. Die zweite Inspektionseinrichtung ist eingerichtet, mindestens ein zweites sich vom ersten Merkmal unterscheidendes Merkmal des Hohlkörpers zu prüfen. Die zweite Auswerteinheit ist eingerichtet, um zu erkennen, ob der Hohlkörper einem fehlerhaften Hohlkörper oder einem fehlerfreien Hohlkörper bezüglich des zweiten Merkmals entspricht. Das System ist eingerichtet, einen zweiten Ausleitvorgang zum Ausleiten eines bezüglich des zweiten Merkmals erkannten fehlerhaften Hohlkörpers und bezüglich eines des ersten Merkmals erkannten fehlerhaften Hohlkörpers im Fall des den Ausleitfehlversuch anzeigenden ersten Signals aus der Bearbeitungslinie mit der zweiten Ausleiteinheit auszuführen.

Gemäß einer weiteren Ausführungsform des Systems umfasst dieses mehrere Inspektionseinrichtungen, denen jeweils eine Auswerteinheit zugeordnet ist. Jede der Auswerteinheiten ist eingerichtet, mehrere oder alle in Förderrichtung auf die jeweilige Inspektionseinrichtung folgende Ausleiteinheiten anzusteuern.

Gemäß einer weiteren Ausführungsform des Systems umfasst das System eine oder mehrere Bearbeitungseinrichtungen, die entlang der Förderstrecke angeordnet sind, um eine Bearbeitungslinie zu bilden und um Hohlkörper zu bearbeiten.

Weitere Ausführungsformen ergeben sich anhand der in den Figuren näher erläuterten Ausführungsbeispiele. Hierbei zeigen:
- Fig. 1: ein System gemäß einem Ausführungsbeispiel und
- Fig. 2: die Schritte eines Verfahrens gemäß einem Ausführungsbeispiel.

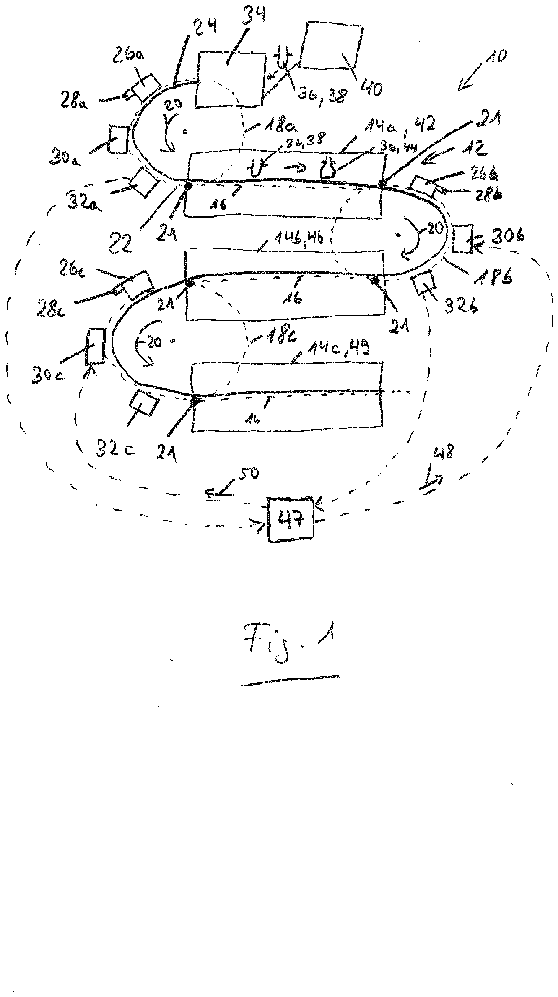

Fig. 1 zeigt ein System 10 zum Ausleiten von fehlerhaften Hohlkörpern 36 aus einer Bearbeitungslinie gemäß einem Ausführungsbeispiel in schematischer Darstellung. Das System 10 weist eine Bearbeitungslinie 12 auf, die mehrere Bearbeitungseinrichtungen 14a, 14b, 14c umfasst, um Hohlkörper 36 zu bearbeiten. Die Bearbeitungseinrichtungen 14a, 14b, 14c sind hier zur besseren Übersicht als Blöcke dargestellt. Die Bearbeitungseinrichtungen 14a, 14b, 14c weisen in ihrem Inneren jeweils eine interne Fördereinrichtung 16 auf, um Hohlkörper 36 durch die jeweilige Bearbeitungseinrichtung 14a, 14b, 14c zu fördern. Weitere Fördereinrichtungen 18a, 18b, 18c sind außerhalb der Bearbeitungseinrichtungen 14a, 14b, 14c dargestellt, um Hohlkörper 36 von einer Bearbeitungseinrichtung 14a, 14b, 14c zur nächsten Bearbeitungseinrichtung 14a, 14b, 14c in einer Förderrichtung 20 zu fördern. Zwischen den internen Fördereinrichtungen 16 und den Fördereinrichtungen 18, 18b, 18c sind Übergabepunkte 21 zur Übergabe der Hohlkörper 36 zwischen den Fördereinrichtungen vorgesehen.

Alle Fördereinrichtungen 16, 18a, 18b, 18c bilden zusammen ein Fördersystem 22 mit einer Förderstrecke 24. An den Fördereinrichtungen 18a, 18b, 18c sind jeweils eine Inspektionseinrichtung 26a, 26b, 26c mit zugeordneter Auswerteinheit 28a, 28b, 28c, eine Ausleiteinheit 30a, 30b, 30c sowie eine Ausleitauswertungseinheit 32a, 32b, 32c angeordnet. Diese dienen dazu, Eigenschaften der Hohlkörper zu überprüfen, z. B. um ein Ergebnis eines vorausgehenden Bearbeitungsschritts in einer der Bearbeitungseinrichtungen 14a, 14b, 14c während der Übergabe der Hohlkörper 36 von einer Bearbeitungseinrichtung 14a, 14b, 14c zur nächsten Bearbeitungseinrichtung 14a, 14b, 14c zu prüfen und ggf. fehlerhafte Hohlkörper 36 auszuleiten.

Demnach ist eine Vorrichtung 34 vorgesehen, mit der Hohlkörper 36 in Form von Vorformlingen 38 aus einem Vorrat 40 in eine erste Fördervorrichtung 18a eingebracht werden. Zangen oder Halteeinrichtungen, die die Hohlkörper 36 halten, sowie die Hohlkörper 36 selbst sind zur besseren Übersicht nicht dargestellt. Entlang der Förderrichtung 20 werden die Hohlkörper 36 dann mit einer ersten Inspektionseinrichtung 26a geprüft, wobei eine erste Auswerteinheit 28a erkennt, ob der geprüfte Hohlkörper 36 einem fehlerhaften Hohlkörper 36 oder einem fehlerfreien Hohlkörper 36 entspricht. In einer ersten Ausleiteinheit 30a werden als fehlerhaft erkannte Hohlkörper 36 ausgeleitet und in einer ersten Ausleitauswertungseinheit 32a wird überprüft, ob ein erster Ausleitvorgang mit der ersten Ausleiteinheit 30a erfolgreich oder erfolglos geblieben ist. Mit der ersten Inspektionseinrichtung 26a werden die als Vorformlinge 38 ausgebildeten Hohlkörper 36 beispielsweise auf geometrische Eigenschaften hin überprüft, um sicherzustellen, dass die Vorformlinge 38 in einer ersten Bearbeitungseinrichtung 14a, die beispielsweise einer Blasformeinrichtung 42 entspricht, zu Behältern umgeformt werden können.

Nach Durchlaufen dieser ersten Bearbeitungseinrichtung 14a erfolgt über die Fördereinrichtung 18b erneut eine Inspektion der nun als Behälter 44 ausgebildeten Hohlkörper 36. Hierzu ist eine zweite Inspektionseinrichtung 26b mit zugeordneter zweiter Auswerteinheit 28b, eine zweite Ausleiteinheit 30b sowie eine zweite Ausleitauswertungseinheit 32b vorgesehen. Mit der zweiten Inspektionseinrichtung 26b wird der zunächst noch leere Behälter 44 erneut im Hinblick auf seine Geometrie geprüft, um diesen in einer zweiten Bearbeitungseinrichtung 14b, die z. B. einer Etikettiervorrichtung 46 entspricht, zu etikettieren. Die Fördereinrichtung 18c fördert dann die etikettierten Hohlkörper 36 zu einer weiteren Bearbeitungseinrichtung 14c, die beispielsweise eine Fülleinrichtung 49 ist. An der Fördereinrichtung 18c sind eine dritte Inspektionseinrichtung 26c mit einer zugeordneten dritten Auswerteinheit 28c, eine dritte Ausleiteinheit 30c sowie eine dritte Ausleitauswertungseinheit 32c angeordnet. Weitere Bearbeitungseinrichtungen 14a, 14b, 14c sowie Fördereinrichtungen 16, 18a, 18b, 18c können folgen, bis die Bearbeitung des Hohlkörpers 36 abgeschlossen ist, sind aber zur besseren Übersichtlichkeit nicht dargestellt.

Ferner ist eine Steuerung 47 des Systems 10 vorgesehen, die die Bearbeitungslinie 12 steuert. Die Auswerteinheiten 28a, 28b, 28c sowie Teile der Ausleitauswertungseinheiten 32a, 32b, 32c sind vorzugsweise Bestandteil der Steuerung 47, hier aber zur besseren Übersicht als externe Komponenten dargestellt. Die Steuerung 47 ist eingerichtet, um im Fall eines mit der ersten Ausleitauswertungseinrichtung 32a erkannten erfolglosen Ausführung eines ersten Ausleitvorgangs ein erstes Signal 48 zu erzeugen und an die zweite Ausleiteinheit 30b zu senden.

Das erste Signal 48 zeigt einen Ausleitfehlversuch an und veranlasst die zweite Ausleiteinheit 30b einen von der ersten Inspektionseinrichtung 26a und der ersten Auswerteinheit 28a erkannten fehlerhaften Hohlkörper 36 auszuleiten, wenn dieser nicht durch die erste Ausleiteinheit 30a erfolgreich ausgeleitet wurde. Ferner ist die Steuerung 47 auch mit der zweiten Ausleitauswertungseinheit 32b verbunden und eingerichtet, ein zweites Signal 50 zu erzeugen, wenn auch ein zweiter Ausleitvorgang 78 mit der zweiten Ausleiteinheit 30a fehlgeschlagen ist, was von der zweiten Ausleitauswertungseinheit 32b erkannt wird. Das zweite Signal 50 wird der dritten Ausleiteinheit 30c zugeführt, um hier einen dritten Ausleitvorgang auszuführen, um den Hohlkörper 36, der von der ersten Inspektionseinrichtung 26a und der ersten Auswerteinheit 28a als fehlerhaft erkannt wurde, in einem dritten Ausleitvorgang auszuleiten.

Die Steuerung 47 ist außerdem eingerichtet, um die dritte Ausleiteinheit 30c auch in dem Fall mit dem zweiten Signal 50 anzusteuern, in dem von der zweiten Inspektionseinrichtung 26b mit zugeordneter Auswerteinheit 28b ein fehlerhafter Hohlkörper 36 erkannt wurde, der von der zweiten Ausleiteinheit 30b nicht ausgeleitet werden konnte. Dies wird mit der zweiten Ausleitauswertungseinheit 32b erkannt. Somit ist die Steuerung 47 eingerichtet, um in Förderrichtung 20 hinter jeder Inspektionseinrichtung 26a, 26b, 26c angeordnete Ausleiteinheiten 30a, 30b, 30c solange anzusteuern, bis ein Ausleitvorgang erfolgreich für den als fehlerhaft erkannten Hohlkörper 36 ausgeführt wurde.

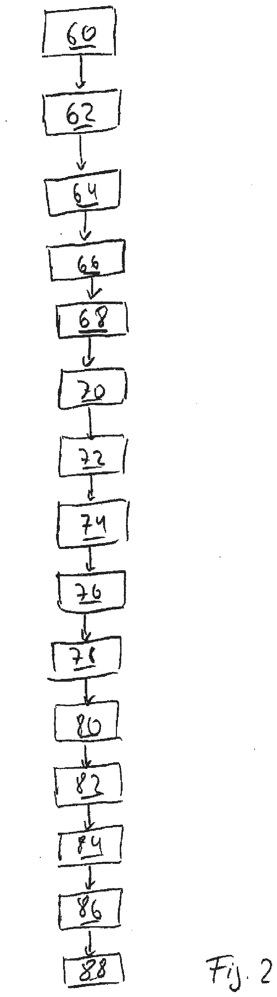

Fig. 2 zeigt die Schritte eines Verfahrens zum Ausleiten von fehlerhaften Hohlkörpern 36 aus einer Bearbeitungslinie 12 zur Bearbeitung von Hohlkörpern 36 gemäß einem Ausführungsbeispiel. In einem Schritt 60 werden Hohlkörper 36 entlang der Bearbeitungslinie 12 in einer Förderrichtung 20 gefördert. In einem Schritt 62 wird jeder Hohlkörper 36 mit einer ersten Inspektionseinrichtung 26a der Bearbeitungslinie 12 geprüft. In einem Schritt 64 wird erkannt, ob der jeweils geprüfte Hohlkörper 36 einem fehlerhaften Hohlkörper 36 oder einem fehlerfreien Hohlkörper 36 entspricht. Dies erfolgt mit einer ersten Auswerteinheit 28a. Ferner wird ein erster Ausleitvorgang 66 zum Ausleiten eines als fehlerhaft erkannten Hohlkörpers 36 aus der Bearbeitungslinie 12 mit einer ersten Ausleiteinheit 30a ausgeführt.

Im Schritt 68 wird mit einer ersten Ausleitauswertungseinheit 32a geprüft, ob der erste Ausleitvorgang 66 erfolgreich oder erfolgslos ausgeführt wurde. Im Schritt 70 wird ein einen Ausleitfehlversuch anzeigendes erstes Signal 48 von der ersten Ausleitauswertungseinheit 32a an mindestens eine in der Förderrichtung 20 auf die erste Ausleiteinheit 30a folgende zweite Ausleiteinheit 30b im Fall eines erfolglos ausgeführten ersten Ausleitvorgangs 66 gesendet. Daraufhin wird in einem Schritt 72 eine Bearbeitung des Hohlkörpers 36 mit einer ersten Bearbeitungseinrichtung 14a ausgeführt.

In einem Schritt 74 wird dann der Hohlkörper 36 von einer zweiten Inspektionseinrichtung 26b geprüft und im Schritt 76 mit einer zweiten Auswerteinheit 28b erkannt, ob der geprüfte Hohlkörper 36 einem fehlerhaften Hohlkörper 36 entspricht. Ein zweiter Ausleitvorgang 78 wird mit einer zweiten Ausleiteinheit 30b ausgeführt, wenn das erste Signal 48 durch die zweite Ausleiteinheit 30b empfangen wurde oder wenn mit der zweiten Auswerteinheit 28b im Schritt 76 der Hohlkörper 36 als fehlerhafter Hohlkörper 36 erkannt wurde.

In einem weiteren Schritt 80 wird dann mit einer zweiten Ausleitauswertungseinheit 32b geprüft, ob der zweite Ausleitvorgang 78 erfolgreich war. Ist der zweite Ausleitvorgang 78 nicht erfolgreich gewesen und wird ein Kriterium eines nächsten Bearbeitungsschritts einer zweiten Bearbeitungseinrichtung 14b nicht erfüllt, wird im Schritt 82 die Bearbeitungslinie 12 gestoppt. Anderenfalls wird ein zweites Signal 50 erzeugt und zunächst ein weiterer Bearbeitungsschritt in einer zweiten Bearbeitungseinrichtung 14b in einem Schritt 82 ausgeführt.

Nach dem Schritt 82 erfolgt wieder eine Inspektion mit einer dritten Inspektionseinrichtung 26c in einem Schritt 84, wobei im Schritt 86 geprüft wird, ob der Hohlkörper 36 einem fehlerhaften Hohlkörper 36 oder einem fehlerfreien Hohlkörper 36 entspricht. Im Fall, dass der Hohlkörper 36 einem fehlerhaften Hohlkörper 36 entspricht, wird ein dritter Ausleitvorgang 88 von einer dritten Ausleiteinheit 30c ausgeführt. Der dritte Ausleitvorgang 88 wird auch ausgeführt, wenn das zweite Signal 50 durch die dritte Ausleiteinheit 30c empfangen wird, abgegeben von der zweiten Ausleitauswertungseinheit 32b. So setzt sich das Verfahren fort, bis die Bearbeitung des Hohlkörpers 36 abgeschlossen ist.

### Bezugszeichen

- 10: System
- 12: Bearbeitungslinie
- 14a: erste Bearbeitungseinrichtung
- 14b: zweite Bearbeitungseinrichtung
- 14c: dritte Bearbeitungseinrichtung
- 16: Fördereinrichtung
- 18a: erste Fördervorrichtung
- 18b: weitere Fördereinrichtung
- 18c: weitere Fördereinrichtung
- 20: Förderrichtung
- 21: Übergabepunkte
- 22: Fördersystem
- 24: Förderstrecke
- 26a: erste Inspektionseinrichtung
- 26b: zweite Inspektionseinrichtung
- 26c: dritte Inspektionseinrichtung
- 28a: erste Auswerteinheit
- 28b: Auswerteinheit
- 28c: Auswerteinheit
- 30a: erste Ausleiteinheit
- 30b: zweite Ausleiteinheit
- 30c: dritte Ausleiteinheit
- 32a: erste Ausleitauswertungseinheit
- 32b: zweite Ausleitauswertungseinheit
- 32c: dritte Ausleitauswertungseinheit
- 34: Vorrichtung
- 36: Hohlkörper
- 38: Vorformlinge
- 40: Vorrat
- 42: Blasformeinrichtung
- 44: Behälter
- 46: Etikettiervorrichtung
- 47: Steuerung
- 48: erstes Signal
- 49: Fülleinrichtung
- 50: zweites Signal
- 60: Fördern von Hohlkörpern
- 62: Prüfen Hohlkörper mit erster Inspektionseinrichtung
- 64: Erkennen, ob geprüfter Hohlkörper einem fehlerhaften Hohlkörper oder einem fehlerfreien Hohlkörper entspricht
- 66: erster Ausleitvorgang
- 68: Prüfen, ob der erste Ausleitvorgang erfolgreich oder erfolgslos ausgeführt wurde
- 70: Senden eines einen Fehlversuch anzeigenden ersten Signals
- 72: Ausführen Bearbeitung des Hohlkörpers
- 74: Prüfen Hohlkörper
- 76: Erkennen, ob der geprüfte Hohlkörper einem fehlerhaften Hohlkörper entspricht
- 78: zweiter Ausleitvorgang
- 80: Prüfen, ob der zweite Ausleitvorgang erfolgreich war
- 82: Stoppen Bearbeitungslinie
- 84: Inspektion mit einer dritten Inspektionseinrichtung
- 86: Prüfen, ob der Hohlkörper einem fehlerhaften Hohlkörper oder einem fehlerfreien Hohlkörper entspricht
- 88: dritter Ausleitvorgang

## Patentansprüche

1. Verfahren zum Ausleiten von fehlerhaften Hohlkörpern (36), insbesondere Vorformlingen (38) oder Behältern (44), aus einer Bearbeitungslinie (12) zur Bearbeitung von Hohlkörpern (36), umfassend:
- Fördern mehrerer Hohlkörper (36) entlang der Bearbeitungslinie (12) in einer Förderrichtung (20),
- Prüfen jedes Hohlkörpers (36) mit einer ersten Inspektionseinrichtung (26a) der Bearbeitungslinie (12),
- Erkennen, ob der jeweils geprüfte Hohlkörper (36) einem fehlerhaften Hohlkörper (36) oder einem fehlerfreien Hohlkörper (36) entspricht mit einer der ersten Inspektionseinrichtung (26a) zugeordneten ersten Auswerteinheit (28a),
- Ausführen eines ersten Ausleitvorgangs (66) zum Ausleiten eines als fehlerhaft erkannten Hohlkörpers (36) aus der Bearbeitungslinie (12) mit einer in der Förderrichtung (20) auf die erste Inspektionseinrichtung (26a) folgenden ersten Ausleiteinheit (30a),
- Prüfen, ob der erste Ausleitvorgang (66) erfolgreich oder erfolglos ausgeführt wurde mit einer der ersten Ausleiteinheit (30a) zugeordneten ersten Ausleitauswertungseinheit (32a),
**gekennzeichnet durch**,
- Senden eines einen Ausleitfehlversuch anzeigenden ersten Signals (48) von der ersten Ausleitauswertungseinheit (32a) an mindestens eine in der Förderrichtung (20) auf die erste Ausleiteinheit (30a) folgende zweite Ausleiteinheit (30b) im Fall eines erfolgslos ausgeführten ersten Ausleitvorgangs (66) und
- Ausführen eines zweiten Ausleitvorgangs (78) zum Ausleiten des erkannten fehlerhaften Hohlkörpers (36) aus der Bearbeitungslinie (12) im Fall des Empfangs des den Ausleitfehlversuch anzeigenden ersten Signals (48) mit der zweiten Ausleiteinheit (30b),
wobei die zweite Ausleiteinheit (30b) in Förderrichtung (20) auf eine zweite Inspektionseinrichtung (26b) folgt, wobei die zweite Inspektionseinrichtung (26b) in Förderrichtung (20) nach der ersten Ausleiteinheit (30a) und somit zwischen der ersten und der zweiten Ausleiteinheit (30a, 30b) angeordnet ist.

2. Verfahren nach Anspruch 1, wobei der zweiten Ausleiteinheit (30b) eine zweite Ausleitauswertungseinheit (32b) zugeordnet ist und mit der zweiten Ausleitauswertungseinheit (32b) geprüft wird, ob der zweite Ausleitvorgang (78) erfolgreich oder erfolglos ausgeführt wurde und
- Senden eines einen Ausleitfehlversuch anzeigenden zweiten Signals (50) von der zweiten Ausleitauswertungseinheit (32b) an mindestens eine in der Förderrichtung (20) auf die zweite Ausleiteinheit (30b) folgende dritte Ausleiteinheit (30c) im Fall eines erfolgslos ausgeführten zweiten Ausleitvorgangs (78) oder
- Stoppen der Bearbeitungslinie (12) zum manuellen Entfernen des erkannten fehlerhaften Hohlkörpers (36) aus der Bearbeitungslinie (12).

3. Verfahren nach Anspruch 1 oder 2, wobei mit der ersten Inspektionseinrichtung (26a) mindestens ein erstes Merkmal und mit der zweiten Inspektionseinrichtung (26b) mindestens ein zweites, sich vom ersten Merkmal unterscheidendes Merkmal des Hohlkörpers (36) geprüft wird, wobei das Verfahren ferner umfasst:
- Erkennen, ob der Hohlkörper (36) einem fehlerhaften Hohlkörper (36) oder einem fehlerfreien Hohlkörper (36) bezüglich des zweiten Merkmals entspricht mit einer der zweiten Inspektionseinrichtung (26b) zugeordneten zweiten Auswerteinheit (28b) und
- Ausführen eines zweiten Ausleitvorgangs (78) zum Ausleiten eines bezüglich des zweiten Merkmals erkannten fehlerhaften Hohlkörpers (36) und bezüglich eines des ersten Merkmals erkannten fehlerhaften Hohlkörpers (36) im Fall des Empfangs des den Ausleitfehlversuch anzeigenden ersten Signals (48).

4. Verfahren nach einem der vorhergehenden Ansprüche, wobei entlang der Förderrichtung (20) mehrere Inspektionseinrichtungen (26a, 26b, 26c), mehrere Ausleiteinheiten (30a, 30b, 30c), vorzugsweise mehrere Bearbeitungseinrichtungen (14), und eine Steuerung (47) zum Steuern zumindest der mehreren Inspektionseinrichtungen (26a, 26b, 26c) und Ausleiteinheiten (30a, 30b, 30c), angeordnet sind und
- mit der Steuerung (47) mehrere oder alle der mehreren in der Förderrichtung (20) auf eine der mehreren Inspektionseinrichtungen (26a, 26b, 26c) folgende Ausleiteinheiten (30a, 30b, 30c) zum Ausführen eines Ausleitvorgangs (66,78, 88) eines fehlerhaften Hohlkörpers (36) angesteuert werden, bis ein Ausleitvorgang (66,78, 88) des fehlerhaften Hohlkörpers (36) erfolgreich ist, wobei insbesondere
- in der Steuerung (47) ein vordefiniertes Kriterium jeweils für mehrere oder jede der Bearbeitungseinrichtungen (14) hinterlegt ist, wobei das Kriterium anzeigt, welche Merkmale des Hohlkörpers (36) für die jeweilige Bearbeitungseinrichtung (14) fehlerfrei sein müssen und/oder fehlerhaft sein dürfen, wobei die Steuerung (47) die Bearbeitungslinie (12) stoppt, bevor ein fehlerhafter Hohlkörper (36) der das Kriterium einer Bearbeitungseinrichtung (14) nicht erfüllt, die entsprechende Bearbeitungseinrichtung (14) erreicht.

5. Verfahren nach einem der vorhergehenden Ansprüche, wobei im Fall eines ausgeleiteten fehlerhaften Hohlkörpers (36) und/oder nach dem Erkennen des fehlerhaften Hohlkörpers (36) der Position des fehlerhaften Hohlkörpers (36) mindestens eine zugeordnete Bearbeitungsstation einer oder mehrere ausgewählter Bearbeitungseinrichtungen (14) deaktiviert werden.

6. System (10) zum Ausleiten von fehlerhaften Hohlkörpern (36), insbesondere Vorformlingen (38) oder Behältern (44), aus einer Bearbeitungslinie (12) zur Bearbeitung von Hohlkörpern (36), wobei das System (10) insbesondere eingerichtet ist, das Verfahren nach einem der Ansprüche 1 bis 5 auszuführen, wobei das System (10) umfasst:
- ein Fördersystem (22), insbesondere mit mehreren Fördereinrichtungen (16, 18), zum Fördern mehrerer Hohlkörper (36) entlang der Bearbeitungslinie (12),
- eine erste Inspektionseinrichtung (26a) zum Prüfen jedes Hohlkörpers (36),
- eine der ersten Inspektionseinrichtung (26a) zugeordnete erste Auswerteinheit (28a) zum Erkennen, ob der jeweils geprüfte Hohlkörper (36) einem fehlerhaften Hohlkörper (36) oder einem fehlerfreien Hohlkörper (36) entspricht,
- eine in der Förderrichtung (20) auf die erste Inspektionseinrichtung (26a) folgende erste Ausleiteinheit (30a) zum Ausführen eines ersten Ausleitvorgangs (66) zum Ausleiten eines als fehlerhaft erkannten Hohlkörpers (36) aus der Bearbeitungslinie (12),
- eine der ersten Ausleiteinheit (30a) zugeordnete erste Ausleitauswertungseinheit (32a) zum Prüfen, ob der erste Ausleitvorgang (66) erfolgreich oder erfolglos ausgeführt wurde und
- mindestens eine in der Förderrichtung (20) auf die erste Ausleiteinheit (30a) folgende zweite Ausleiteinheit (30b),
**dadurch gekennzeichnet, dass**
die erste Ausleitauswertungseinheit (32a) eingerichtet ist, ein einen Ausleitfehlversuch anzeigendes erstes Signal (48) an die zweite Ausleiteinheit (30b) im Fall eines erfolglos ausführten ersten Ausleitvorgangs (66) zu senden und die zweite Ausleiteinheit (30b) eingerichtet ist, im Fall des Empfangs des den Ausleitfehlversuch anzeigenden ersten Signals (48) einen zweiten Ausleitvorgang (78) zum Ausleiten des erkannten fehlerhaften Hohlkörpers (36) aus der Bearbeitungslinie (12) auszuführen, wobei
das System (10) eine zweite Inspektionseinrichtung (26b) aufweist, wobei die zweite Ausleiteinheit (30b) in der Förderrichtung (20) auf die zweite Inspektionseinrichtung (26b) folgt und die zweite Inspektionseinrichtung (26b) somit in Förderrichtung (20) nach der ersten Ausleiteinheit (30a) und vor der zweiten Ausleiteinheit (30b) angeordnet ist.

7. System (10) nach Anspruch 6, wobei das System (10) eine zweite Ausleitauswertungseinheit (32b) aufweist, die der zweiten Ausleiteinheit (30b) zugeordnet ist, zum Prüfen, ob der zweite Ausleitvorgang (78) erfolgreich oder erfolglos ausgeführt wurde,
- wobei das System (10) eine in der Förderrichtung (20) auf die zweite Ausleiteinheit (30b) folgende dritte Ausleiteinheit (30c) umfasst und die zweite Ausleitauswertungseinheit (32b) eingerichtet ist, im Fall eines erfolglos ausführten zweiten Ausleitvorgangs (78) ein einen Ausleitfehlversuch anzeigendes zweites Signal (50) von der zweiten Ausleitauswertungseinheit (32b) an die dritte Ausleiteinheit (30c) zu senden, oder
- die zweite Ausleitauswertungseinheit (32b) eingerichtet ist, die Bearbeitungslinie (12) zum manuellen Entfernen des zum Ausleiten erkannten fehlerhaften Hohlkörpers (36) aus der Bearbeitungslinie (12) zu stoppen.

8. System (10) nach einem der Ansprüche 6 oder 7, wobei die erste Inspektionseinrichtung (26a) eingerichtet ist, mindestens ein erstes Merkmal des Hohlkörpers (36) zu prüfen, und die zweite Inspektionseinrichtung (26b) eingerichtet ist, mindestens ein zweites sich vom ersten Merkmal unterscheidendes Merkmal des Hohlkörpers (36) zu prüfen, wobei
die zweite Auswerteinheit (28b) eingerichtet ist, um zu erkennen, ob der Hohlkörper (36) einem fehlerhaften Hohlkörper (36) oder einem fehlerfreien Hohlkörper (36) bezüglich des zweiten Merkmals entspricht und
das System (10) ferner eingerichtet ist, einen zweiten Ausleitvorgang (78) zum Ausleiten eines bezüglich des zweiten Merkmals erkannten fehlerhaften Hohlkörpers (36) und bezüglich eines des ersten Merkmals erkannten fehlerhaften Hohlkörpers (36) im Fall des Empfangs des den Ausleitfehlversuch anzeigenden ersten Signals (48) aus der Bearbeitungslinie (12) mit der zweiten Ausleiteinheit (30b) auszuführen.

9. System (10) nach einem der Ansprüche 6 bis 8, umfassend mehrere Inspektionseinrichtungen (26a, 26b, 26c), denen jeweils eine Auswerteinheit (28a, 28b, 28c) zugeordnet ist, wobei jede der Auswerteinheiten (28a, 28b, 28c) eingerichtet ist, mehrere oder alle in Förderrichtung (20) auf die jeweilige Inspektionseinrichtung (26a, 26b, 26c) folgenden Ausleiteinheiten (30a, 30b, 30c) anzusteuern.

10. System (10) nach einem der Ansprüche 6 bis 9, wobei das System (10) ein oder mehrere Bearbeitungseinrichtungen (14) umfasst, die entlang der Förderstrecke (24) angeordnet sind und eine Bearbeitungslinie (12) bilden.

## Claims

1. Method for rejecting defective hollow bodies (36), in particular preforms (38) or containers (44), from a processing line (12) for processing hollow bodies (36), comprising:
- conveying a plurality of hollow bodies (36) along the processing line (12) in a conveying direction (20),
- testing of each hollow body (36) with a first inspection device (26a) of the processing line (12),
- determining whether the tested hollow body (36) corresponds to a defective hollow body (36) or a defect-free hollow body (36) with a first evaluation unit (28a) assigned to the first inspection device (26a),
- execution of a first rejection operation (66) for the discharge of a hollow body (36) recognized as defective from the processing line (12) with a first rejection unit (30a) following the first inspection device (26a) in the conveying direction (20),
- checking whether the first rejection operation (66) was carried out successfully or unsuccessfully with a first rejection evaluation unit (32a) assigned to the first rejection unit (30a),
**characterized by**
- transmitting a first signal (48) indicating a failed rejection attempt from the first rejection evaluation unit (32a) to at least one second rejection unit (30b) following the first rejection unit (30a) in the conveying direction (20) in the case of an unsuccessful first rejection operation (66), and
- execution of a second rejection operation (78) for the discharge of the detected defective hollow body (36) from the processing line (12) in the case of receipt of the first signal (48) indicating the rejection failure attempt with the second rejection unit (30b),
wherein the second rejection unit (30b) in the conveying direction (20) follows a second inspection device (26b), wherein the second inspection device (26b) in the conveying direction (20) is followed by the first rejection unit (30a) and thus between the first and second rejection units (30a, 30b).

2. The method according to Claim 1, wherein a second rejection evaluation unit (32b) is assigned to the second rejection unit (30b) and the second rejection evaluation unit (32b) is used to test whether the second rejection process (78) was successfully or unsuccessfully executed, and
- transmission of a second signal (50) indicating a failed rejection attempt from the second rejection evaluation unit (32b) to at least one third rejection unit (30c) following the second rejection unit (30b) in the conveying direction (20) in the event of an unsuccessful second rejection operation (78) or
- stopping of the processing line (12) for the manual removal of the detected defective hollow body (36) from the processing line (12).

3. The method according to Claim 1 or 2, wherein at least one first feature of the hollow body (36) is tested with the first inspection device (26a) and at least one second feature of the hollow body (36) which differs from the first feature with the second inspection device (26b), wherein the method further comprises:
- detecting whether the hollow body (36) corresponds to a defective hollow body (36) or a defect-free hollow body (36) with respect to the second feature with a second evaluation unit (28b) assigned to the second inspection device (26b), and
- execution of a second rejection process (78) for the removal of a defective hollow body detected with respect to the second feature (36) and with respect to a defective hollow body detected with respect to the first characteristic (36) in the case of receiving the first signal indicating the rejection failure attempt (48).

4. The method according to any one of the preceding claims, wherein a plurality of inspection devices (26a, 26b, 26c), a plurality of rejection units (30a, 30b, 30c), preferably a plurality of processing devices (14), and a control system (47) for controlling at least the plurality of inspection devices (26a, 26b, 26c) and rejection units (30a, 30b, 30c) are arranged along the conveying direction (20), and
- with the control system (47), a plurality of or all of the plurality of discharge units (30a, 30b, 30c) following in the conveying direction (20) to one of the plurality of inspection devices (26a, 26b, 26c) are controlled for the execution of a rejection operation (66, 78, 88) of a defective hollow body (36) until a rejection operation (66, 78, 88) of the defective hollow body (36) is successful, wherein, in particular:
- a predefined criterion is stored in the control system (47) for a plurality of or each of the processing equipment (14), wherein the criterion indicates which characteristics of the hollow body (36) must be defect-free and/or may be defective for the respective processing device (14), wherein the control system (47) stops the processing line (12) before a defective hollow body (36) which does not meet the criterion of a processing device (14), the corresponding processing device (14).

5. The method according to any one of the preceding claims, wherein in the case of a rejected defective hollow body (36) and/or after detecting the defective hollow body (36) of the position of the defective hollow body (36), at least one assigned processing station of one or a plurality of selected processing equipment (14) is deactivated.

6. The system (10) for the discharge of defective hollow bodies (36), in particular preforms (38) or containers (44), from a processing line (12) for the processing of hollow bodies (36), wherein the system (10) is in particular configured to carry out the method according to one of claims 1 to 5, wherein the system (10) comprises:
- a conveyor system (22), in particular with a plurality of conveyors (16, 18), for conveying a plurality of hollow bodies (36) along the processing line (12),
- a first inspection device (26a) for testing each hollow body (36),
- a first evaluation unit (28a) assigned to the first inspection device (26a) for detecting whether the tested hollow body (36) corresponds to a defective hollow body (36) or a defect-free hollow body (36),
- a first rejection unit (30a) following the first inspection device (26a) in the conveying direction (20) for carrying out a first rejection operation (66) for the removal of a hollow body (36) from the processing line (12) which has been identified as defective,
- a first rejection evaluation unit (32a) assigned to the first rejection unit (30a) for checking whether the first rejection operation (66) was carried out successfully or unsuccessfully, and
- at least one second rejection unit (30b) following the first rejection unit (30a) in the conveying direction (20),
**characterized in that**
the first rejection evaluation unit (32a) is configured to send a first signal (48) indicating a failed rejection attempt to the second rejection unit (30b) to the second rejection unit (30b) in the event of an unsuccessful first rejection operation (66) and the second rejection unit (30b) is configured to execute a second rejection operation (78) to reject the detected defective hollow body (36) from the processing line (12) in the event of receiving the first signal (48) indicating the rejection failure attempt, wherein
the system (10) has a second inspection device (26b), wherein the second rejection unit (30b) follows the second inspection device (26b) in the conveying direction (20) and the second inspection device (26b) is thus located in the conveying direction (20) after the first rejection unit (30a) and before the second rejection unit (30b).

7. The system (10) according to Claim 6, wherein system (10) comprises a second rejection evaluation unit (32b) assigned to the second rejection unit (30b), for checking whether the second rejection operation (78) was successfully or unsuccessfully executed,
- wherein the system (10) comprises a third rejection unit (30c) following the second rejection unit (30b) in the conveying direction (20) and the second rejection evaluation unit (32b) is configured to send a second signal (50) from the second rejection evaluation unit (32b) to the third rejection unit (30c) indicating a failed rejection attempt in the event of an unsuccessful second rejection operation (78), or
- the second rejection evaluation unit (32b) is configured to stop the processing line (12) for the manual removal of the defective hollow body (36) detected for rejection from the processing line (12).

8. The system (10) according to any one of the Claims 6 or 7, wherein the first inspection device (26a) is configured, to test at least one first feature of the hollow body (36) and the second inspection device (26b) is configured to test at least one second feature of the hollow body (36) which differs from the first feature, wherein
the second evaluation unit (28b) is configured to detect whether the hollow body (36) corresponds to a defective hollow body (36) or a defect-free hollow body (36) with respect to the second feature, and
the system (10) is further equipped to carry out a second rejection process (78) for the removal of a defective hollow body (36) detected with respect to the second characteristic and with regard to a defective hollow body (36) detected with regard to the first characteristic in the case of the reception of the first signal (48) from the processing line (12) with the second rejection unit (30b).

9. The system (10) according to any one of the Claims 6 to 8, comprising a plurality of inspection devices (26a, 26b, 26c), which is assigned an evaluation unit (28a, 28b, 28c), wherein each of the evaluation units (28a, 28b, 28c) is configured to control a plurality of or all of the rejection units (30a, 30b, 30c) following the respective inspection device (26a, 26b, 26c) in the conveying direction (20).

10. The system (10) according to any one of the Claims 6 to 9, wherein the system (10) comprises one or a plurality of processing devices (14) which are arranged along the conveyor line (24) and form a processing line (12).

## Revendications

1. Procédé de déviation de corps creux (36) défectueux, notamment de préformes (38) ou de récipients (44), hors d'une ligne de traitement (12) de corps creux (36) comprenant les opérations suivantes :
- transporter plusieurs corps creux (36) le long de la ligne de traitement (12) selon un sens de transport (20),
- à l'aide d'un premier dispositif d'inspection (26a) de la ligne de traitement (12), contrôler chaque corps creux (36),
- à l'aide d'une première unité d'évaluation (28a) affectée au premier dispositif d'inspection (26a), vérifier si le corps creux (36) respectivement contrôlé correspond à un corps creux (36) défectueux ou à un corps creux (36) sans défauts,
- à l'aide d'une première unité de déviation (30a) qui suit le premier dispositif d'inspection (26a) dans le sens de transport (20), exécuter une première opération de déviation (66) pour dévier de la ligne de traitement (12) un corps creux (36) identifié comme étant défectueux,
- à l'aide d'une première unité d'évaluation de déviation (32a) affectée à la première unité de déviation (30a), vérifier si la première opération de déviation (66) a été effectuée avec succès ou a échoué,
**caractérisé par**
- l'émission par la première unité d'évaluation de déviation (32a) d'un premier signal d'échec (48) affichant l'échec d'une première opération de déviation (66), ce signal étant émis à au moins une deuxième unité de déviation (30b) qui suit la première unité de déviation (30a) dans le sens de transport (20), et
- l'exécution par la deuxième unité de déviation (30b), en cas de réception du signal d'échec (48), d'une deuxième opération de déviation (78) pour dévier de la ligne de traitement (12) le corps creux (36) défectueux identifié,
la deuxième unité de déviation (30b) suivant, dans le sens du transport (20), un deuxième dispositif d'inspection (26b) et le deuxième dispositif d'inspection (26b) étant, dans le sens du transport (20), agencé après la première unité de déviation (30a) et donc entre la première et la deuxième unité de déviation (30a, 30b).

2. Procédé selon la revendication 1, la deuxième unité de déviation (30b) étant affectée à une deuxième unité d'évaluation de déviation (32b) avec laquelle est vérifié si la deuxième opération de déviation (66) a été effectuée avec succès ou a échoué, et
- un deuxième signal d'échec (50) affichant l'échec d'une deuxième opération de déviation (78) étant émis par la deuxième unité d'évaluation de déviation (32b) à au moins une troisième unité de déviation (30c) qui suit la deuxième unité de déviation (30b) dans le sens de transport (20), ou
- la ligne de traitement (12) étant stoppée pour extraire manuellement le corps creux (36) identifié comme défectueux de la ligne de traitement (12).

3. Procédé selon la revendication 1 ou 2, le premier dispositif d'inspection (26a) vérifiant au moins une première caractéristique du corps creux (36) et le deuxième dispositif d'inspection (26b) vérifiant au moins une deuxième caractéristique différente de la première, le procédé comprenant les opérations suivantes :
- à l'aide d'une deuxième unité d'évaluation (28b) affectée au deuxième dispositif d'inspection (26b), vérifier si, concernant la deuxième caractéristique, le corps creux (36) correspond à un corps creux (36) défectueux ou à un corps creux (36) sans défauts, et
- exécuter une deuxième opération de déviation (78) pour dévier un corps creux (36) identifié comme étant défectueux quant à la deuxième caractéristique et identifié comme étant défectueux quant à la première caractéristique en cas de réception du premier signal signalant l'échec (48) de l'opération de déviation.

4. Procédé selon l'une des revendications précédentes, plusieurs dispositifs d'inspection (26a, 26b, 26c), plusieurs unités de déviation (30a, 30b, 30c), de préférence plusieurs dispositifs de traitement (14) et une commande (47) pour commander au moins les dispositifs d'inspection (26a, 26b, 26c) et les unités de déviation (30a, 30b, 30c) étant agencés le long de la direction de transport (20), et
- plusieurs ou toutes les unités de déviation (30a, 30b, 30c) qui suivent l'un des dispositifs d'inspection (26a, 26b, 26c) dans le sens du transport (20) étant adressées par la commande (47) pour exécuter une opération de déviation (66,78, 88) d'un corps creux (36) défectueux jusqu'à ce qu'une opération de déviation 66,78, 88) du corps creux (36) défectueux soit effectuée avec succès,
- un critère prédéfini pour plusieurs ou chacun des dispositifs de traitement (14) étant notamment respectivement enregistré dans la commande (47), ce critère montrant quelles caractéristiques du corps creux (36) doivent être exempts de défauts pour le dispositif de traitement (14) respectif et/ou peuvent être défectueux, la commande (47) stoppant la ligne de traitement (12) avant qu'un corps creux (36) défectueux qui ne remplit pas le critère d'un dispositif de traitement (14) n'atteigne le dispositif de traitement (14) correspondant.

5. Procédé selon l'une des revendications précédentes, au moins une station de traitement d'un ou de plusieurs dispositifs de traitement (14) étant désactivée(s) en cas de déviation d'un corps creux (36) défectueux correspondant et/ou après la détection de la position du corps creux (36) défectueux.

6. Système (10) de déviation de corps creux (36) défectueux, notamment de préformes (38) ou de récipients (44), hors d'une ligne de traitement (12) de corps creux (36), le système (10) étant notamment configuré pour exécuter le procédé selon l'une des revendications 1 à 5, le système (10) comprenant :
- un système de transport (22), notamment doté de plusieurs dispositifs de transport (16, 18) pour transporter plusieurs corps creux (36) le long de la ligne de traitement (12),
- un premier dispositif d'inspection (26a) pour contrôler chaque corps creux (36),
- une première unité d'évaluation (28a) affectée au premier dispositif d'inspection (26a) pour vérifier si le corps creux (36) respectivement contrôlé correspond à un corps creux (36) défectueux ou à un corps creux (36) sans défauts,
- une première unité de déviation (30a) qui suit, dans le sens de transport (20), le premier dispositif d'inspection (26a) pour exécuter une première opération de déviation (66) pour dévier de la ligne de traitement (12) un corps creux (36) identifié comme étant défectueux,
- une première unité d'évaluation de déviation (32a) affectée à la première unité de déviation (30a) pour vérifier si la première opération de déviation (66) a été effectuée avec succès ou a échoué, et
- au moins une deuxième unité de déviation (30b) qui suit, dans le sens de transport (20), la première unité de déviation (30a),
**caractérisé en ce que**
la première unité d'évaluation de déviation (32a) est configurée pour émettre à la deuxième unité de déviation (30b) un premier signal d'échec (48) affichant l'échec d'une première opération de déviation (66) et la deuxième unité de déviation (30b) est configurée pour exécuter en cas de réception du premier signal d'échec (48) d'une opération de déviation une deuxième opération de déviation (78) pour dévier de la ligne de traitement (12) le corps creux (36) défectueux identifié,
le système (10) présentant un deuxième dispositif d'inspection (26b), la deuxième unité de déviation (30b) suivant, dans le sens du transport (20), le deuxième dispositif d'inspection (26b) et le deuxième dispositif d'inspection (26b) étant donc, dans le sens du transport (20), agencé après la première unité de déviation (30a) et avant la deuxième unité de déviation (30a, 30b).

7. Système (10) selon la revendication 6, le système (10) présentant une deuxième unité d'évaluation de déviation (32b) affectée à la deuxième unité de déviation (30b) pour vérifier si la deuxième opération de déviation (78) a été effectuée avec succès ou a échoué,
- le système (10) comprenant une troisième unité de déviation (30c) qui suit, dans le sens de transport (20), la deuxième unité de déviation (30b), et la deuxième unité d'évaluation de déviation (32b) étant configurée pour, en cas d'échec d'une deuxième opération de déviation (78), émettre à la troisième unité de déviation (30c) un deuxième signal d'échec (50) affichant l'échec d'une deuxième opération de déviation (78), ou
- la deuxième unité d'évaluation de déviation (32b) étant configurée pour stopper la ligne de traitement (12) pour extraire manuellement le corps creux (36) identifié comme défectueux de la ligne de traitement (12).

8. Système (10) selon l'une des revendications 6 ou 7, le premier dispositif d'inspection (26a) étant configuré pour vérifier au moins une première caractéristique du corps creux (36) et le deuxième dispositif d'inspection (26b) étant configuré pour vérifier au moins une deuxième caractéristique du corps creux (36) différente de la première,
la deuxième unité d'évaluation (28b) étant configurée pour vérifier si, concernant la deuxième caractéristique, le corps creux (36) correspond à un corps creux (36) défectueux ou à un corps creux (36) sans défauts, et
le système (10) étant en outre configuré pour exécuter une deuxième opération de déviation (78) pour dévier de la ligne de traitement (12) au moyen de la deuxième unité de déviation (30b) un corps creux (36) identifié comme étant défectueux quant à la deuxième caractéristique et identifié comme étant défectueux quant à la première caractéristique en cas de réception du premier signal signalant l'échec (48) de l'opération de déviation.

9. Système (10) selon l'une des revendications 6 à 8 comprenant plusieurs dispositifs d'inspection (26a, 26b, 26c) auxquels est respectivement affectée une unité d'évaluation (28a, 28b, 28c), chacune des unités d'évaluation (28a, 28b, 28c) étant configurée pour adresser plusieurs ou toutes les unités de déviation (30a, 30b, 30c) qui suivent les dispositifs d'inspection (26a, 26b, 26c) respectifs dans le sens du transport (20).

10. Système (10) selon l'une des revendications 6 à 9, le système (10) comprenant un ou plusieurs dispositifs de traitement (14) agencés le long de la section de transport (24) et formant une ligne de traitement (12).
